(19) Europäisches Patentamt
European Patent Office
Office européen des brevets

(11) **EP 4 733 343 A1**

(12) **EUROPEAN PATENT APPLICATION**
published in accordance with Art. 153(4) EPC

(43) Date of publication:
**29.04.2026 Bulletin 2026/18**

(21) Application number: **24831946.9**

(22) Date of filing: **25.06.2024**

(51) International Patent Classification (IPC):
***C08G 18/48*** *(2006.01)* ***C08G 18/10*** *(2006.01)*
***C08G 65/06*** *(2006.01)* ***H01B 1/06*** *(2006.01)*
***H01M 4/62*** *(2006.01)* ***H01M 10/052*** *(2010.01)*
***H01M 10/0565*** *(2010.01)*

(52) Cooperative Patent Classification (CPC):
Y02E 60/10

(86) International application number:
**PCT/JP2024/023005**

(87) International publication number:
**WO 2025/005086 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.06.2023 JP 2023104549**

(71) Applicant: **NATIONAL UNIVERSITY CORPORATION, IWATE UNIVERSITY**
**Morioka-shi, Iwate 020-8550 (JP)**

(72) Inventor: **SHIBASAKI, Yuji**
**Morioka-shi, Iwate 020-8550 (JP)**

(74) Representative: **Dehns**
**10 Old Bailey**
**London EC4M 7NG (GB)**

(54) **MULTI-BLOCK COPOLYMER, METHOD FOR PRODUCING SAME, COMPOSITION FOR ELECTROLYTES, COMPOSITION FOR BINDERS, COMPOSITION FOR BUFFERS, AND LITHIUM ION BATTERY**

(57) [Problem]

To provide a novel polymer (multiblock copolymer) which has a capability comparable to the conductivity of a liquid electrolyte, has excellent adhesion between an inorganic electrolyte and an electrode, and is safe and excellent in stability.

[Solution]

A multiblock copolymer is used in which a unit structure in which a soft segment composed of polyglycidol (PGLYD) and a hard segment composed of polyethylene glycol (PEG) are bonded together is linked in a number of two or more.

FIG.8

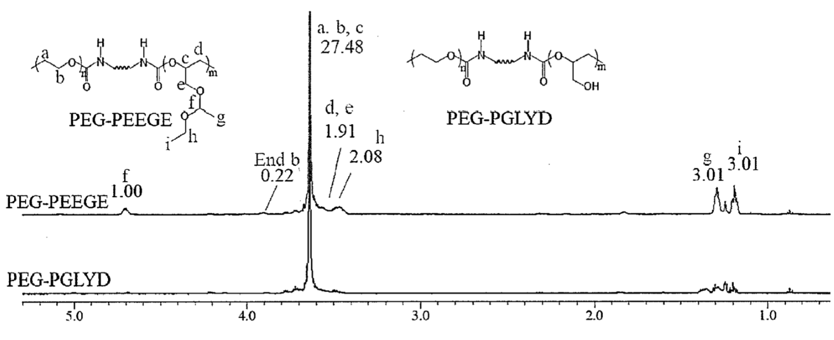




EP 4 733 343 A1

## Description

[Technical Field]

The present invention relates to a multiblock copolymer and a method for producing the same, an electrolyte composition, a binder composition, a buffer composition, and a lithium ion battery.

[Background Art]

Lithium ion batteries are widely used in mobile phones, small household appliances, and the like, because among secondary batteries they can be made lightweight and compact, have a high energy density, and can be rapidly charged and discharged.

When a lithium ion battery is used in a portable device, moisture may enter a liquid electrolyte such as ethylene carbonate due to physical damage during transportation. In such a case, there is a problem in that metallic lithium deposited during charge and discharge reacts with the moisture to cause accidents such as ignition and explosion. In addition, current lithium ion batteries cannot be used under extremely low temperature environments or at high temperatures exceeding the boiling point of organic electrolytes. Therefore, solid electrolytes having lower flammability and being less affected by operating temperature, as alternatives to liquid electrolytes, are attracting attention.

As solid electrolytes, inorganic electrolytes or organic electrolytes are used. Specifically, in inorganic electrolytes, sulfides and oxides are used. In organic electrolytes, polyethylene glycol (PEG) and polyethylene carbonate (PEC), which have ether bonds through which lithium ions can be easily conducted, are used. Inorganic electrolytes are produced by firing at high temperatures; however, cracks and the like may occur under use conditions, resulting in a decrease in conductivity. On the other hand, PEG used as an organic electrolyte has features not found in inorganic electrolytes and is therefore attracting attention. However, PEG is a crystalline polymer, and when it crystallizes, it blocks lithium conduction paths and the lithium ion conductivity decreases to $10^{-8}$ S/cm. PEG is an amorphous polymer and has a higher lithium ion transference number than PEG, but it has low film formability and is difficult to handle.

Further, since the melting point of PEG is 55°C, lithium ion conductivity of $10^{-4}$ S/cm is exhibited at temperatures equal to or higher than this temperature, but in order for a solid electrolyte to be usable even at room temperature, it is necessary that the polymer does not crystallize.

In order to suppress crystallization of PEG, methods using branched PEG (Non-Patent Literature 1), methods using hydrogels (Patent Literature 1), and methods of adding inorganic additives such as montmorillonite and silica gel have been developed. However, the method using branched PEG is complicated, and hydrogels have such low mechanical strength of the polymer that they are not suitable for practical use. Moreover, the materials used in these methods are not adhesive and cannot play the role of filling gaps between an inorganic electrolyte and an electrode.

On the other hand, it has been proposed to use polyglycidol (PGLYD) as a lithium ion electrolyte as an alternative to PEG (Patent Literature 2). Due to the high amorphousness of PGLYD, high lithium ion conductivity has been achieved.

A compound obtained by eliminating one molecule of water from glycerin is known as glycidol. Glycidol is a hydroxymethyl epoxide and, like ethylene oxide, can undergo ring-opening polymerization. PEG can be produced from ethylene oxide, whereas polyglycidol (PGLYD) can be produced from glycidol. PGLYD has the same polyethylene oxide backbone as PEG, but it randomly branches due to the presence of hydroxymethyl groups. Accordingly, although the ratio of carbon to oxygen is the same in PEG and PGLYD, PGLYD has the problem that it cannot crystallize. For this reason, PGLYD cannot be used as a solid electrolyte.

[Prior Art Documents]

[Non-Patent Literature]

Non-Patent Literature 1: Naoya Ogata, Journal of the Textile Machinery Society of Japan, pp. 52-57, 1990.

Non-Patent Literature 2: H. Frey et al., J. Am. Chem. Soc., 2009, 131(23), 7954-7955.

[Patent Literature]

Patent Literature 1: JP H05-25353 A.
Patent Literature 2: WO 00/35991.

[Summary of the Invention]

[Problems to be Solved by the Invention]

In view of the prior art, there is a demand for the development of a solid electrolyte which has performance comparable to the conductivity ($10^{-3}$ S/cm) of a liquid electrolyte and is safe and excellent in stability.

In particular, realization of a solid electrolyte capable of adhering between an inorganic electrolyte and an electrode is desired. In the prior art, in order to eliminate gaps between an inorganic electrolyte and an electrode, it is necessary to clamp the two materials under a strong pressure, and a heavy container is required to cover the battery. When an adhesive electrolyte is used, such a large container becomes unnecessary. Moreover, when an adhesive electrolyte is used, even if cracks occur in the inorganic electrolyte during use, the adhesive electrolyte enters such gaps and prevents deterioration of the battery.

The present invention has been made in view of the above circumstances, and an object thereof is to provide a novel polymer (multiblock copolymer) which has performance comparable to the conductivity of a liquid electrolyte, has excellent adhesiveness between an inorganic electrolyte and an electrode, and is safe and excellent in stability, as well as to provide a method for producing the same. Another object of the present invention is to provide an electrolyte composition, a binder composition, and a buffer composition containing this polymer. A further object of the present invention is to provide a lithium ion battery including these compositions.

[Means for Solving the Problems]

In order to solve the above problems, the following multiblock copolymer and method for producing the same, and an electrolyte composition, a binder composition, and a buffer composition are provided.

[1] A multiblock copolymer in which a unit structure in which a soft segment composed of polyglycidol (PGLYD) and a hard segment composed of polyethylene glycol (PEG) are bonded together is linked in a number of two or more.
[2] The multiblock copolymer according to [1], wherein the weight average molecular weight is 10,000 or more.
[3] The multiblock copolymer according to [1] or [2], having a lithium ion conduction path group.
[4] An electrolyte composition for a lithium ion battery, comprising any of the multiblock copolymers according to [1] to [3].
[5] A binder composition for a lithium ion battery, comprising any of the multiblock copolymers according to [1] to [3].
[6] A buffer composition for a lithium ion battery, comprising any of the multiblock copolymers according to [1] to [3].
[7] A lithium ion battery comprising at least one of the electrolyte composition according to [4], the binder composition according to [5], and the buffer composition according to [6].
[8] A method for producing the multiblock copolymer according to [1], the method comprising:

synthesizing a compound represented by the following formula (1) by reacting PEG having isocyanate groups at both terminals with polyEEGE (PEEGE),

[Formula 1]

$$-\!\left[\left(\mathrm{PEEGE}\right)\!-\!\left(\mathrm{PEG}\right)\right]_{\ell} \qquad (1)$$

(where l is a natural number of 2 or more); and
synthesizing a multiblock copolymer represented by the following formula (2) by acting an acid on the compound,

[Formula 2]

$$-\!\left[\left(\mathrm{PGLYD}\right)\!-\!\left(\mathrm{PEG}\right)\right]_{\ell} \qquad (2)$$

(where l is a natural number of 2 or more).

[9] A method for producing the multiblock copolymer according to [1], the method comprising:

synthesizing a compound represented by the following formula (1) by reacting PEG having hydroxyl groups at both terminals, polyEEGE (PEEGE), and a diisocyanate compound,

[Formula 3]

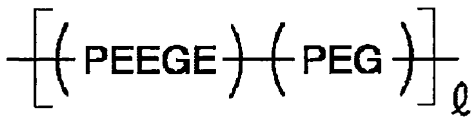

(1)

(where l is a natural number of 2 or more); and
synthesizing a multiblock copolymer represented by the following formula (2) by acting an acid on the compound,

[Formula 4]

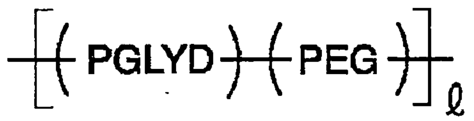

(2)

(where l is a natural number of 2 or more).

[Effects of the Invention]

The multiblock copolymer of the present invention has performance comparable to the conductivity of a liquid electrolyte, is excellent in adhesiveness between an inorganic electrolyte and an electrode, and is safe and excellent in stability. Therefore, this multiblock copolymer can be suitably used in an electrolyte composition, a binder composition, and a buffer composition for a lithium ion battery.

The lithium ion battery of the present invention includes at least one of an electrolyte composition, a binder composition, and a buffer composition, has performance comparable to the conductivity of a liquid electrolyte, and is excellent in adhesiveness between an inorganic electrolyte and an electrode, and is safe and excellent in stability.

Further, according to the method for producing the multiblock copolymer of the present invention, the above multiblock copolymer can be produced easily and stably.

[Brief Description of the Drawings]

[Fig. 1] This figure shows a schematic cross-sectional view illustrating one embodiment of a lithium ion battery of the present invention.
[Fig. 2] This figure shows the $^1$H NMR spectrum (400 MHz, CDCl3) of EEGE.
[Fig. 3] This figure shows the FT-IR spectrum of PEEGE.
[Fig. 4] This figure shows (a) the $^1$H NMR spectrum of a polymer solution and (b) the $^1$H NMR spectrum of the obtained polymer.
[Fig. 5] This figure shows the FT-IR spectrum of PEG-PEEGE.
[Fig. 6] This figure shows the $^1$H NMR spectra of PEG, PEEGE, and PEG-PEEGE.
[Fig. 7] This figure shows the IR spectra of PEG-PGLYD and PEG-PEEGE.
[Fig. 8] This figure shows the $^1$H NMR spectra of PEG-PEEGE and PEG-PGLYD.
[Fig. 9] This figure shows a schematic diagram illustrating one mode of the method for producing the multiblock copolymer of the present invention.
[Fig. 10] This figure shows the result of adding 1.5 g of the synthesized multiblock copolymer to 3 mL of NMP, stirring at room temperature for 24 hours, and observing solubility.
[Fig. 11] This figure shows confirmation of tackiness by coating and drying an NMP solution of the multiblock

copolymer.

[Fig. 12] This figure shows a positive electrode material obtained by mixing an NMP solution of the multiblock copolymer with iron phosphate containing a conductive material, coating the mixture on an aluminum foil, and then drying and pressing.

[Fig. 13] This figure shows results of investigation of initial charge-discharge characteristics of a battery produced by punching the positive electrode material (Fig. 12) into the size of a coin cell.

[Fig. 14] This figure shows results of a cycle test of a battery produced by punching the positive electrode material (Fig. 12) into the size of a coin cell.

[Embodiments for Carrying Out the Invention]

Hereinafter, one embodiment of the multiblock copolymer of the present invention and a method for producing the same will be described. In the following description, the notation "PEEGE-PEG" is synonymous with "PEG-PEEGE", and the notation "PGLYD-PEG" is synonymous with "PEG-PGLYD".

The multiblock copolymer of the present invention has been designed in view of the amorphous nature of polyglycidol (PGLYD) and the crystalline nature of polyethylene glycol (PEG). The multiblock copolymer of the present invention is a multiblock copolymer including PGLYD and PEG, in which PGLYD functions as a soft segment capable of flowing over the entire temperature range, and PEG functions as a hard segment that crystallizes at 60°C or lower. That is, in the multiblock copolymer of the present invention, a unit structure (PGLYD-PEG) in which a soft segment composed of polyglycidol (PGLYD) and a hard segment composed of polyethylene glycol (PEG) are bound together is linked in a number of two or more. In other words, the segments (soft segments and hard segments) in the multiblock copolymer of the present invention are four or more.

The number of unit structures (PGLYD-PEG) in the multiblock copolymer of the present invention is not particularly limited, but from the viewpoint of the conductivity of the electrolyte and adhesiveness (tackiness), a range of, for example, 4 to 100 can be exemplified.

It should be noted that a triblock copolymer of PGLYD-PEG is known and was reported by Frey et al. in 2009 (Non-Patent Literature 2), but a multiblock copolymer of PGLYD-PEG in which the segments (number of blocks) are four or more has not been known in the prior art. Further, in the method for producing the multiblock copolymer of the present invention, an increase in molecular weight can be easily achieved as compared with conventional methods for producing triblock copolymers, and as a result, formation into a material is facilitated. Moreover, the multiblock copolymer of the present invention is characterized in that the hard segment of PEG and the soft segment of PGLYD can undergo phase separation stably and, as a result, this multiblock copolymer serves as a good elastomer and becomes an adhesive material.

It is preferable that both segments of PGLYD and PEG constituting the multiblock copolymer of the present invention have lithium ion conduction path groups. In addition, the multiblock copolymer of the present invention behaves as an elastomer due to the presence of soft segments and hard segments at 60°C or lower (for example, in the temperature range in which batteries are produced), and thereby functions as an adhesive.

A first embodiment of a method for producing the multiblock copolymer of the present invention can be outlined and exemplified by the following procedure.

(1) With respect to PEG

PEG having, for example, a weight average molecular weight in the range of 10,000 to 20,000 can be synthesized by a known method. The hydroxyl groups at both terminals of PEG are reacted with, for example, a compound such as hexamethylene diisocyanate to convert the terminals into isocyanate groups, thereby providing an A2-type macromonomer. That is, PEG having isocyanate groups at both terminals is synthesized.

(2) With respect to PGLYD

The hydroxymethyl group of glycidol (GLYD) is protected with, for example, ethyl vinyl ether to synthesize EEGE. Next, this EEGE is subjected to a polymerization reaction in the presence of a diol of HO-R-OH, such as tetraethylene glycol or pentaerythritol, as a polymerization initiator. In this way, it is converted into a precursor of PGLYD to provide a macromonomer such as a B2-type or B4-type macromonomer. This precursor has hydroxyl groups at its terminals.

(3) With respect to the multiblock copolymer (PGLYD/PEG block copolymer)

The PEG having isocyanate groups at both terminals obtained in (1) and the precursor obtained in (2) are subjected to multiblock copolymerization by heating in the presence of a tin-based catalyst, and the above protection is

removed with, for example, hydrogen chloride gas, hydrochloric acid, or a hydrochloric acid methanol solution. In this way, a multiblock copolymer containing PGLYD and PEG can be obtained. In the multiblock copolymer, a unit structure (PGLYD-PEG) in which a soft segment composed of polyglycidol (PGLYD) and a hard segment composed of polyethylene glycol (PEG) are bound together is linked in a number of two or more. The multiblock copolymer is a polymer having four or more segments (polymer blocks), and preferably is a polymer having about 4 to 20 segments (polymer blocks).

That is, in the multiblock copolymer of the present invention, a unit structure (PGLYD-PEG) composed of PGLYD and PEG is linked in a number of two or more, and the multiblock copolymer is represented by the following formula (2).

[Formula 5]

$$\left[ \left( \mathrm{PGLYD} \right) \left( \mathrm{PEG} \right) \right]_{l} \qquad (2)$$

In the formula, l is a natural number of 2 or more, and typically the range of l is 4 to 100.

Of course, the above method is not limited to those described, and various embodiments may be selected in consideration of known knowledge and means.

The range of the weight average molecular weight (Mw) of the multiblock copolymer of the present invention is not particularly limited and is, for example, 2,000 or more. In addition, in view of preferred conductivity and adhesiveness in a lithium ion battery, it is preferable that the weight average molecular weight of the polymer compound of the present invention is in the range of 10,000 to 1,000,000. When the weight average molecular weight of the multiblock copolymer is less than 10,000, a self-supporting film may not be able to be formed. When the weight average molecular weight of the multiblock copolymer exceeds 1,000,000, the viscosity may become high and the processability may decrease. Furthermore, when the weight average molecular weight of the multiblock copolymer exceeds 50,000, toughness can be imparted to a film containing the multiblock copolymer, and when the molecular weight is 50,000 to 1,000,000, the durability of the film can be enhanced.

The range of the number average molecular weight (Mn) of the multiblock copolymer of the present invention can be appropriately adjusted by selecting the molecular weights of PEG and PGLYD (precursor), respectively, and the reaction conditions for block copolymerization. Specifically, the number average molecular weight of the multiblock copolymer of the present invention may be 1,000 or more, and a range of 5,000 to 500,000 can be preferably exemplified.

The multiblock copolymer of the present invention may have lithium ion conduction path groups. In this case, the lithium ion conduction path groups may be groups having terminal hydroxyl groups or various other groups, and examples thereof include nitrile groups and ammonium groups. For example, as seen in Patent Literature 2, part of the hydroxyl groups of PGLYD can be converted into nitrile groups to increase the polarity of the polymer and thereby improve lithium conductivity. In addition, the remaining hydroxyl groups can be converted into an imidazolium salt having bis(trifluorosulfonyl)imide anions, and lithium perchlorate can be doped, whereby high lithium ion conductivity can be imparted.

PGLYD and PEG constituting the unit structure of the multiblock copolymer of the present invention may have various substituents. Examples of the substituents include hydroxyl groups, nitrile groups, ammonium groups, carboxyl groups, and sulfo groups.

Next, with reference to Fig. 1, one embodiment of a lithium ion battery of the present invention and materials thereof (electrolyte, binder, buffer, and the like) will be described. Fig. 1 is a schematic cross-sectional view illustrating one embodiment of the lithium ion battery of the present invention.

The electrolyte composition of the present invention is an electrolyte composition for a lithium ion battery and contains the above-described multiblock copolymer of the present invention.

The binder composition of the present invention is a binder composition for a lithium ion battery and contains the above-described multiblock copolymer of the present invention.

The buffer composition of the present invention is a buffer composition for a lithium ion battery and contains the above-described multiblock copolymer of the present invention.

The electrolyte composition, the binder composition, and the buffer composition may contain known components usable for each use.

The lithium ion battery of the present invention includes at least one of the above electrolyte composition, binder composition, and buffer composition.

The electrolyte composition, binder composition, and buffer composition of the present invention contain the multiblock copolymer of the present invention. Therefore, these compositions can be used in lithium ion batteries. For example, the electrolyte composition, binder composition, and buffer composition of the present invention are excellent in adhesiveness and are safe and excellent in stability. Also, for example, a lithium ion battery in which the electrolyte

composition of the present invention is used as a solid electrolyte has performance comparable to the conductivity of a liquid electrolyte and is safe and excellent in stability.

<One embodiment of a lithium ion battery>

In one embodiment of the lithium ion battery (lithium ion secondary battery) of the present invention, an electrolyte composition containing the multiblock copolymer of the present invention can be included as a solid electrolyte.

The lithium ion battery 100 also includes a solid electrolyte layer 11, a positive electrode active material layer 12, a negative electrode active material layer 13, a positive electrode current collector 14, and a negative electrode current collector 15. The lithium ion battery 100 can have at least one layer selected from the solid electrolyte layer 11, the positive electrode active material layer 12, and the negative electrode active material layer 13 which contains at least one of the electrolyte composition, the binder composition, and the buffer composition of the present invention.

The lithium ion battery of the present invention has performance comparable to the conductivity of a liquid electrolyte, is excellent in adhesiveness between an inorganic electrolyte and an electrode, and is safe and excellent in stability.

(Solid electrolyte layer)

The solid electrolyte layer 11 is a layer formed between the positive electrode active material layer 12 and the negative electrode active material layer 13. The solid electrolyte layer 11 can contain, as a component of the solid electrolyte, an electrolyte composition containing the multiblock copolymer of the present invention. The solid electrolyte may also contain a solid electrolyte other than the multiblock copolymer of the present invention. Specifically, examples of other solid electrolytes include lithium aluminum titanium phosphate (LATP), lithium aluminum germanium phosphate (LAGP), and lithium lanthanum zirconium oxide (LLZ). These solid electrolytes may be used alone as a single kind or in combination of two or more kinds, and may also be used in combination with the multiblock copolymer of the present invention.

The solid electrolyte layer 11 may further contain a binder. The binder may be constituted by a binder composition containing the multiblock copolymer of the present invention. The binder composition may also use thermoplastic resins, thermosetting resins, and the like. Specifically, examples thereof include polyethylene, polypropylene, polytetrafluoroethylene (PTFE), polyvinylidene fluoride (PVDF), styrene-butadiene rubber, tetrafluoroethylene-hexafluoroethylene copolymer, tetrafluoroethylene-hexafluoropropylene copolymer (FEP), tetrafluoroethylene-perfluoroalkyl vinyl ether copolymer (PFA), vinylidene fluoride-hexafluoropropylene copolymer, vinylidene fluoride-chlorotrifluoroethylene copolymer, ethylene-tetrafluoroethylene copolymer (ETFE resin), polychlorotrifluoroethylene (PCTFE), vinylidene fluoride-pentafluoropropylene copolymer, propylene-tetrafluoroethylene copolymer, ethylene-chlorotrifluoroethylene copolymer (ECTFE), vinylidene fluoride-hexafluoropropylene-tetrafluoroethylene copolymer, vinylidene fluoride-perfluoromethyl vinyl ether-tetrafluoroethylene copolymer, ethylene-acrylic acid copolymer, polyacrylic acid, sodium polyacrylate, lithium polyacrylate, polymethacrylic acid, sodium polymethacrylate, and lithium polymethacrylate. These binders may be used alone or in combination of two or more.

(Positive electrode active material layer)

The positive electrode active material layer 12 is formed on the positive electrode current collector 14. The positive electrode active material layer 12 contains a solid electrolyte, an electrode active material, and a conductive material. The positive electrode active material layer 12 may further contain various binders such as the binder composition of the present invention. Hereinafter, the positive electrode active material layer 12 will be described.

(Solid electrolyte)

As the solid electrolyte contained in the positive electrode active material layer 12, the electrolyte composition of the present invention can be used. That is, the solid electrolyte may contain the multiblock copolymer of the present invention, and may contain a solid electrolyte other than the multiblock copolymer of the present invention. Examples of solid electrolytes other than the multiblock copolymer of the present invention include, for example, lithium aluminum titanium phosphate (LATP), lithium aluminum germanium phosphate (LAGP), and lithium lanthanum zirconium oxide (LLZ). The solid electrolytes other than the polymer for polymer electrolytes of the present invention described above may be used alone as a single kind or in combination of two or more kinds, and may also be used in combination with the multiblock copolymer of the present invention.

(Positive electrode active material)

The electrode active material (positive electrode active material) used for the positive electrode is not particularly limited as long as it is a material capable of reversibly releasing and occluding lithium ions and allowing electron transport. Examples of the positive electrode active material include lithium transition metal oxides such as lithium cobalt oxide, lithium nickel oxide, lithium manganese oxide, and lithium iron phosphate, and sulfur-based active materials such as sulfur and its discharge products, for example lithium sulfide and lithium polysulfide. The positive electrode active material may be composed of one of the above materials alone, or may be composed of two or more thereof.

(Positive electrode conductive material)

As the positive electrode conductive material, conductive additives generally usable in lithium ion secondary batteries and all-solid-state lithium ion secondary batteries can be used. Examples of the positive electrode conductive material include carbon materials such as carbon black including acetylene black and Ketjen black, carbon fibers, vapor-grown carbon fibers, graphite powder, carbon nanotubes, and activated carbon. The conductive material may be composed of one of the above materials alone, or may be composed of two or more thereof.

(Negative electrode active material layer)

The negative electrode active material layer 13 is formed on the negative electrode current collector 15. The negative electrode active material layer 13 contains a solid electrolyte, a negative electrode active material, and a negative electrode conductive material. The negative electrode active material layer 13 may further contain various binders such as the binder composition of the present invention. Hereinafter, the negative electrode active material layer 13 will be described.

(Solid electrolyte)

As the solid electrolyte contained in the negative electrode active material layer 13, the electrolyte composition of the present invention can be used. That is, the solid electrolyte may contain the multiblock copolymer of the present invention, and may contain a solid electrolyte other than the multiblock copolymer (electrolyte composition) of the present invention. Examples of solid electrolytes other than the multiblock copolymer (electrolyte composition) of the present invention include, for example, lithium aluminum titanium phosphate (LATP), lithium aluminum germanium phosphate (LAGP), and lithium lanthanum zirconium oxide (LLZ). The solid electrolytes other than the multiblock copolymer (electrolyte composition) of the present invention described above may be used alone as a single kind or in combination of two or more kinds, and may also be used in combination with the multiblock copolymer of the present invention.

(Negative electrode active material)

The negative electrode active material is not particularly limited as long as it is a material capable of reversibly releasing and occluding lithium ions and allowing electron transport. Examples of the negative electrode active material include carbon materials such as natural graphite, artificial graphite, resin carbon, carbon fibers, activated carbon, hard carbon, and soft carbon; alloy materials mainly composed of tin, tin alloys, silicon, silicon alloys, gallium, gallium alloys, indium, indium alloys, aluminum, and aluminum alloys; conductive polymers such as polyacene, polyacetylene, and polypyrrole; metallic lithium; and lithium-titanium composite oxides. The negative electrode active material may be composed of one of the above materials alone, or may be composed of two or more thereof.

(Negative electrode conductive material)

As the negative electrode conductive material, conductive additives generally usable in lithium ion secondary batteries and all-solid-state lithium ion secondary batteries can be used. Examples of the negative electrode conductive material include carbon materials such as carbon black including acetylene black and Ketjen black, carbon fibers, vapor-grown carbon fibers, graphite powder, carbon nanotubes, and activated carbon. The conductive material may be composed of one of the above materials alone, or may be composed of two or more thereof.

(Positive electrode current collector)

The positive electrode current collector 14 is provided so as to be in contact with the positive electrode active material layer 12. By providing the positive electrode current collector 14, it becomes easier to extract electricity from the

positive electrode active material layer 12. As the positive electrode current collector 14, known positive electrode current collectors can be used, and examples thereof include Al and SUS. The thickness and shape of the positive electrode current collector 14 can be appropriately selected.

(Negative electrode current collector)

The negative electrode current collector 15 is provided so as to be in contact with the negative electrode active material layer 13. By providing the negative electrode current collector 15, it becomes easier to extract electricity from the negative electrode active material layer 13. As the negative electrode current collector 15, known negative electrode current collectors can be used, and examples thereof include Cu. When the electronic conductivity of the negative electrode active material layer 13 is high, the negative electrode current collector 15 need not be provided. The thickness and shape of the negative electrode current collector 15 can be appropriately selected.

The lithium ion battery 100 can be produced by a known method.

In addition, insofar as not departing from the spirit of the present invention, the constituent elements in the foregoing embodiment may be appropriately replaced with known constituent elements, and the above-described modified examples may be appropriately combined. Specifically, for example, the lithium ion battery may include a buffer layer. The buffer composition of the present invention can be used for the buffer layer.

It should be noted that, in the above embodiment, the positive electrode current collector 14 is provided, but when the electronic conductivity of the positive electrode active material layer 12 is high, the positive electrode current collector 14 need not be provided. Likewise, in the above embodiment, the negative electrode current collector 15 is provided, but when the electronic conductivity of the negative electrode active material layer 13 is high, the negative electrode current collector 15 need not be provided.

Next, one embodiment of a method for producing the multiblock copolymer of the present invention will be described.

In a first embodiment of a method for producing the multiblock copolymer of the present invention, the method includes the following steps:

a step of synthesizing a compound (PEEGE-PEG) represented by the following formula (1) by reacting PEG having isocyanate groups at both terminals with polyEEGE (PEEGE),

[Formula 6]

$$-\!\!\left[\left(\text{PEEGE}\right)\!\left(\text{PEG}\right)\right]_{\ell}\!- \qquad (1)$$

(where l is a natural number of 2 or more); and
a step of synthesizing a multiblock copolymer (PGLYD-PEG) represented by the following formula (2) by acting an acid on the compound (PEEGE-PEG),

[Formula 7]

$$-\!\!\left[\left(\text{PGLYD}\right)\!\left(\text{PEG}\right)\right]_{\ell}\!- \qquad (2)$$

(where l is a natural number of 2 or more).

For example, PEEGE can be synthesized from a difunctional alcohol, and PEG having hydroxyl groups at both terminals that is commercially available can be used. After reacting PEG with a diisocyanate compound and then coupling it with PEEGE, a compound (PEEGE-PEG) represented by formula (1) can be synthesized. Examples of the diisocyanate compound include diphenylmethane diisocyanate, hexamethylene diisocyanate, toluene diisocyanate, and isophorone diisocyanate.

An acid is acted on this compound (PEEGE-PEG) to remove protection of the hydroxymethyl groups and to synthesize the multiblock copolymer (PGLYD-PEG) represented by the above formula (2). The acid is not particularly limited, and examples thereof include hydrogen chloride gas, hydrochloric acid, and a hydrochloric acid methanol solution.

In the production method of the present invention, it is possible to improve lithium ion conductivity by converting part of the hydroxyl groups of PGLYD into nitrile groups to increase the polarity of the polymer. It is also possible to impart high lithium ion conductivity by converting the remaining hydroxyl groups into an imidazolium salt having bis(trifluorosulfonyl)imide anions and doping lithium perchlorate.

In a second embodiment of the method for producing the multiblock copolymer of the present invention, the method includes the following steps:

a step of synthesizing a compound (PEEGE-PEG) represented by the following formula (1) by reacting PEG having hydroxyl groups at both terminals, polyEEGE (PEEGE), and a diisocyanate compound,

[Formula 8]

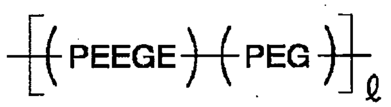

(1)

(where I is a natural number of 2 or more); and

a step of synthesizing a multiblock copolymer (PGLYD-PEG) represented by the following formula (2) by acting an acid on the compound (PEEGE-PEG),

[Formula 9]

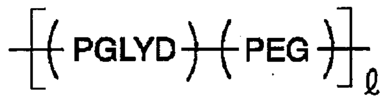

(2)

(where I is a natural number of 2 or more).

Specifically, in the second embodiment, polyEEGE (PEEGE) having hydroxyl groups at both terminals, which is synthesized from a difunctional alcohol, and PEG having hydroxyl groups at both terminals are mixed and then linked in a single step using a diisocyanate compound. Accordingly, the second embodiment using PEG having hydroxyl groups at both terminals is a more direct and simple method as compared with the first embodiment. For example, a compound (PEEGE-PEG) can be synthesized by reacting a diisocyanate compound such as 1,3-bis(isocyanatomethyl)cyclohexane with a solution of PEEGE and PEG each having hydroxyl groups at both terminals.

The diisocyanate compound may be exemplified by one or more selected from the group consisting of aliphatic diisocyanates, alicyclic diisocyanates, and aromatic diisocyanates.

Examples of the aliphatic diisocyanates include butane diisocyanate, pentane diisocyanate, hexamethylene diisocyanate (HDI), trimethylhexamethylene diisocyanate, and lysine diisocyanate.

Examples of the alicyclic diisocyanates include isophorone diisocyanate (IPDI), hydrogenated xylylene diisocyanate, hydrogenated diphenylmethane diisocyanate, and 1,4-cyclohexane diisocyanate.

Examples of the aromatic diisocyanates include xylylene diisocyanate (XDI), diphenylmethane diisocyanate (MDI), and toluene diisocyanate (TDI).

The method for producing the multiblock copolymer of the present invention may further include, in addition to the above steps, a step of synthesizing EEGE (protection of the hydroxymethyl group of glycidol), a step of synthesizing PEEGE, and a step of substituting terminal functional groups of PEG.

Furthermore, in the method for producing the multiblock copolymer of the present invention, other steps such as a step of substituting a part of the functional groups may be included.

Hereinafter, the multiblock copolymer of the present invention, the method for producing the same, and the lithium ion battery will be described in more detail by way of Examples. Of course, the present invention is not limited to these Examples, and various embodiments are contemplated.

[Examples]

<1> Method for producing multiblock copolymer (first embodiment)

1) Synthesis of a PEG polymer having isocyanate groups at both terminals

[Formula 10]

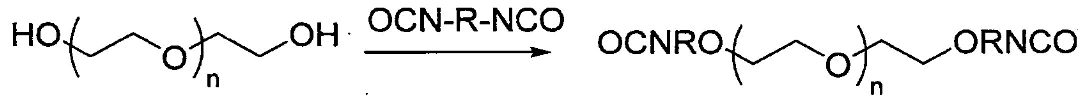


PEG-NCO

PEG having hydroxyl groups at both terminals (weight average molecular weight 16,000, 10 g, 2.5 mmol of OH groups) and dibutyltin dilaurate (molecular weight 631.57, 7.89 mg, 0.0125 mmol) were dissolved in 20 mL of toluene, hexamethylene diisocyanate (molecular weight 168.2, 0.421 g, 2.5 mmol) was added, and the mixture was reacted at room temperature overnight. The resulting solution was poured into cold ether, and the precipitated white solid was collected by filtration. This was dried under reduced pressure at 50°C overnight to obtain the target product (yield: 85%).

2) Protection of hydroxymethyl group of glycidol (synthesis of EEGE)

[Formula 11]

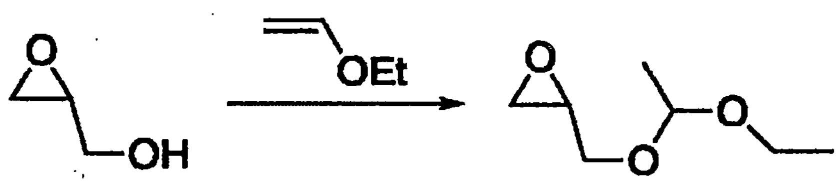

EEGE

Ethyl vinyl ether (147 g, 2.04 mol) and glycidol (50 g, 0.675 mol) were placed in a three-necked flask equipped with a stirrer bar and stirred while cooling with a methanol bath. After sufficiently cooling the solution, p-toluenesulfonic acid 1.25 g (7.26 mmol) was added in small portions, and the mixture was stirred for 3 hours. A 1 L saturated aqueous NaHCO3 solution was prepared and placed in a 170 mL three-necked flask and stirred. Thereafter, the organic layer was separated using a separatory funnel and washed with saturated aqueous NaHCO3 solution. Then MgSO4 was added, and the mixture was stirred and dried overnight. After drying, MgSO4 was removed by filtration, the filtrate was concentrated using an evaporator, and the product was obtained by purification through vacuum distillation.

3) Synthesis of polyEEGE

[Formula 12]

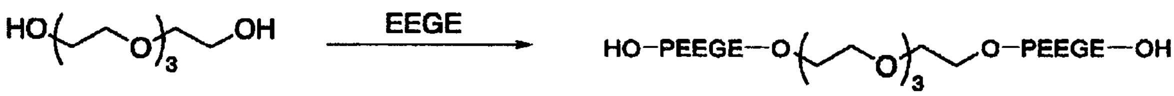


PEEGE

Tetraethylene glycol (molecular weight 194.23, 1.94 mg, 0.001 mmol), cesium hydroxide (molecular weight 149.912, 0.12 mg, 0.01 mmol), and toluene (30 mL) were placed in a two-necked flask and dehydrated using a Dean-Stark apparatus to prepare the cesium salt. This solution was heated to 90°C, and EEGE (0.146 g, 1 mmol) was added dropwise and polymerized. The polymer was precipitated by pouring the polymerization solution into hexane. The precipitate was dried overnight at 50°C to obtain the target compound (polyEEGE: PEEGE) (yield: 68%).

4) Synthesis of PGLYD-PEG multiblock copolymer

[Formula 13]

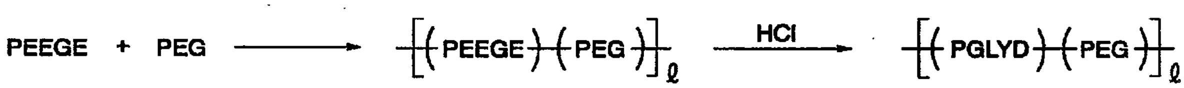


(where l is a natural number of 2 or more)

The obtained PEG having isocyanate groups at both terminals (weight average molecular weight 8,000; 1 g; 0.25 mmol of isocyanate groups) and PEEGE (weight average molecular weight 14,600; 1.825 g; 0.25 mmol of hydroxyl groups) were placed in a flask and stirred using 5 mL of N-methylpyrrolidone (NMP). Dibutyltin dilaurate (molecular weight 631.57; 7.89 mg; 0.0125 mmol) as a catalyst was added thereto, and the mixture was stirred at 60°C overnight. The resulting polymerization solution was poured into cold ether, the precipitate was collected and dried at 50°C overnight, thereby obtaining the multiblock copolymer (PEEGE-PEG).

The obtained multiblock copolymer (PEEGE-PEG) was dissolved in THF, and hydrogen chloride gas was bubbled into the solution for 10 minutes. Thereafter, nitrogen was blown into the solution, which was then poured into hexane, and the precipitated polymer (multiblock copolymer (PGLYD-PEG)) was collected.

5) Nitrilation and other modification of hydroxyl groups of the polymer

[Formula 14]

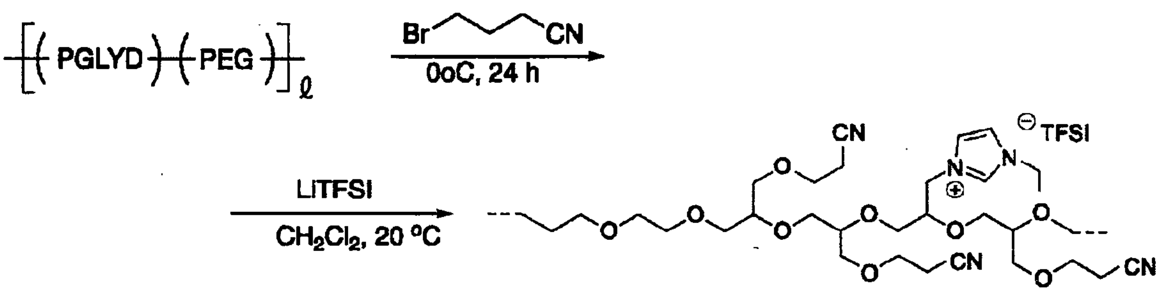


The PGLYD-PEG multiblock copolymer obtained as described above was dissolved in NMP, and sodium hydride was added. Thereafter, bromopropionitrile in an amount corresponding to 80% of the hydroxyl groups was added, and the mixture was dried at 60°C overnight. The solution was poured into acetone, and the precipitate was collected.

To the above nitrile-modified PGLYD-PEG multiblock copolymer, an excess amount of p-toluenesulfonyl chloride was added to activate the hydroxyl groups, and ethyl imidazole was added to convert the hydroxyl groups into imidazolium salts. Thereafter, lithium bis(trifluorosulfonyl)amide was added to replace the chloride ions with bis(trifluorosulfonyl)imide.

6) The PGLYD-PEG multiblock copolymer obtained as described above exhibited sufficient adhesiveness (tack) to aluminum foil. The multiblock copolymer also showed good solubility in NMP and water. The lithium ion conductivity was $10^{-5}$ S/m at room temperature, which is a favorable value as an adhesive.

<2> Method for producing multiblock copolymer (second embodiment) and properties

(1) Instrumental analysis

NMR spectra: $^1$H-NMR, 13C-NMR, DEPT-135, and two-dimensional NMR spectra were recorded using a JNM-ECA500 (JEOL). Tetramethylsilane (TMS) was used as an internal standard, and CDCl3 and DMSO-d6 were used as deuterated solvents.

IR spectra: Measurements were carried out using an FT-IR4200 type A (JASCO) by the light transmission method, using KBr as a reference material and adding a small amount of the compound to KBr. The prepared gels or films were measured by an attenuated total reflection (ATR) method.

Molecular weight measurement: A sample (15 mg) was dissolved in 5 mL of THF or NMP, and the weight average molecular weight (Mw), number average molecular weight (Mn), and dispersity (Mw/Mn) were determined from elution curves calibrated with polystyrene using a high-speed GPC system HLC-8420 (Tosoh Corporation).

Solubility test: A sample (10 mg) was added to 5 mL of each solvent and stirred for 24 hours, and the solubility was then checked. For samples that did not dissolve, the temperature was raised to near the boiling point, and after further stirring for 24 hours, the mixture was allowed to stand at room temperature to check whether precipitation occurred. The solvents were used as purchased without purification. The solvents used are listed below.

Chloroform ($CHCl_3$)
N-methylpyrrolidone (NMP)
Tetrahydrofuran (THF)
Methanol (MeOH)
Toluene
Hexane
Acetone
Water ($H_2O$)

(2) Synthesis of EEGE (2,3-epoxypropyl-1-ethoxy ethyl ether)

(Operation)

Ethyl vinyl ether (196 mL, 2.04 mol) and glycidol (44.6 mL, 0.675 mol) were placed in a 300 mL single-necked flask equipped with a stirrer bar and stirred under a nitrogen atmosphere while cooling in a low-temperature bath set at -25°C. After the temperature of the solution was sufficiently lowered, $TsOH \cdot H_2O$ (1.38 g, 7.26 mmol) was added in small portions, and the mixture was stirred for 3 hours.

(Work-up)

The reaction mixture was transferred to a separatory funnel and washed with 1 L of saturated aqueous $NaHCO_3$ solution prepared in advance. After confirming that the pH was 7 and that TsOH had been removed, $MgSO_4$ was added, and the mixture was stirred and dehydrated overnight.

(Purification)

After dehydration, $MgSO_4$ was removed by filtration, the filtrate was concentrated using an evaporator, and the product was obtained by purification through vacuum distillation (diaphragm pump, 110°C).

(Results)

Appearance: colorless transparent liquid
Yield: 47.0 g
Yield (percent): 47.6%

[Formula 15]

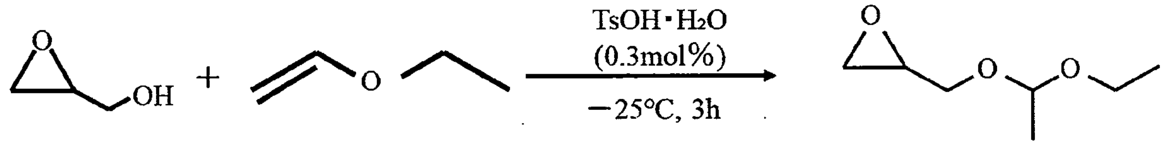


Glycidol Ethyl Vinyl Ether EEGE

Fig. 2 is a figure showing the $^1$H NMR spectrum (400 MHz, CDCl3) of the product. As shown in Fig. 2, it was confirmed that EEGE was synthesized as the product.

(3) Synthesis of PEEGE

(Operation)

Tetraethylene glycol (0.074 g, 0.38 mmol) and cesium hydroxide monohydrate (0.13 g, 0.70 mmol) were placed in a 50 mL single-necked flask equipped with a stirrer bar, a Dean-Stark trap, a thermometer, a condenser, and a three-way stopcock, and the mixture was reacted in toluene (20 mL) as a solvent under a nitrogen atmosphere at 130°C overnight. After the reaction, the Dean-Stark trap was removed, toluene was removed by distillation under reduced pressure at 40°C, and then distillation under reduced pressure was further carried out at 100°C for 1 hour to completely remove toluene. Thereafter, a condenser was attached again, EEGE (4.4 g, 30 mmol) was added under a nitrogen atmosphere, and the mixture was reacted at 65°C for 2 days.

(Work-up)

The polymerization was terminated using a 1:1 mixture of methanol and acetic acid.

(Purification)

The reaction mixture was dissolved in tetrahydrofuran, poured into water, and then dried under reduced pressure at 100°C. The structure of the obtained product was analyzed by IR, $^1$H NMR, and GPC.

(Results)

Appearance: viscous liquid
Yield: 4.49 g
Yield (percent): 94.5%
GPC data

$$Mn = 3900$$

$$Mw = 4800$$

$$Mw/Mn = 1.24$$

[Formula 16]

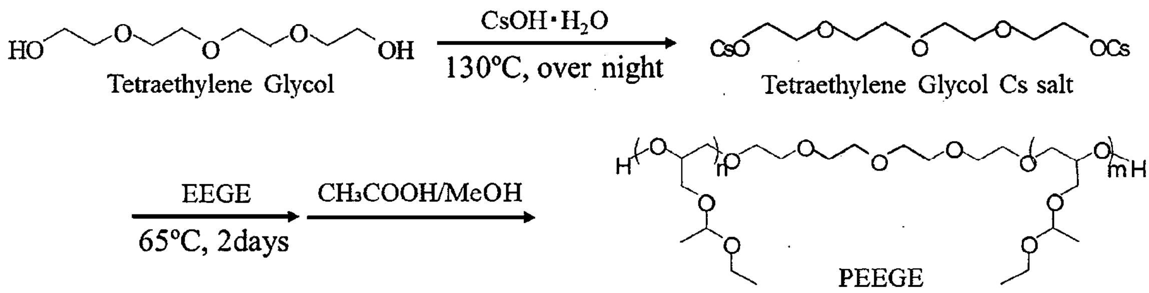


Fig. 3 is a figure showing the FT-IR spectrum of the product. Fig. 4(a) is a figure showing the $^1$H NMR spectrum of a solution of the product, and Fig. 4(b) is a figure showing the $^1$H NMR spectrum of the obtained product. As shown in Fig. 3 and Fig. 4, it was confirmed that PEEGE was synthesized as the product.

(4) Synthesis of multiblock copolymer (PEG-PEEGE)

(Operation)

In the same manner as in the synthesis of PEEGE, tetraethylene glycol (0.074 g, 0.38 mmol) and cesium hydroxide monohydrate (0.13 g, 0.70 mmol) were placed in a 50 mL single-necked flask equipped with a stirrer bar, a Dean-Stark trap, a thermometer, a condenser, and a three-way stopcock, and the mixture was reacted in toluene (20 mL) as a solvent under a nitrogen atmosphere at 130°C overnight. After the reaction, the Dean-Stark apparatus was removed, toluene was removed by distillation under reduced pressure at 40°C, and then distillation under reduced pressure was further carried out at 100°C for 1 hour to completely remove toluene. Thereafter, a condenser was attached again, EEGE (4.4 g, 30 mmol) was added under a nitrogen atmosphere, and the mixture was reacted at 65°C for 2 days to give the PEEGE Cs salt. After the mixture was returned to room temperature, PEG3k (2.0 g, 0.55 mmol) and hexamethylene diisocyanate (0.16 g, 0.98 mmol), each dissolved in 1 mL of NMP, were added, followed by addition of dibutyltin dilaurate (0.019 g, 0.03 mmol), and the mixture was reacted at 60°C overnight.

(Work-up)

While maintaining the temperature, the reaction mixture was poured into a silicone mold.

(Purification)

The silicone mold was placed in a vacuum oven set at 50°C so as not to cool it, and dried under reduced pressure at 140°C. The structure of the obtained product was analyzed by IR, ^1H NMR, and GPC.

(Results)

Form: viscous liquid
Yield: 2.84 g
Yield (percent): 42.4%

$$Mn = 6500$$

$$Mw = 14000$$

$$Mw/Mn = 2.2$$

[Formula 17]

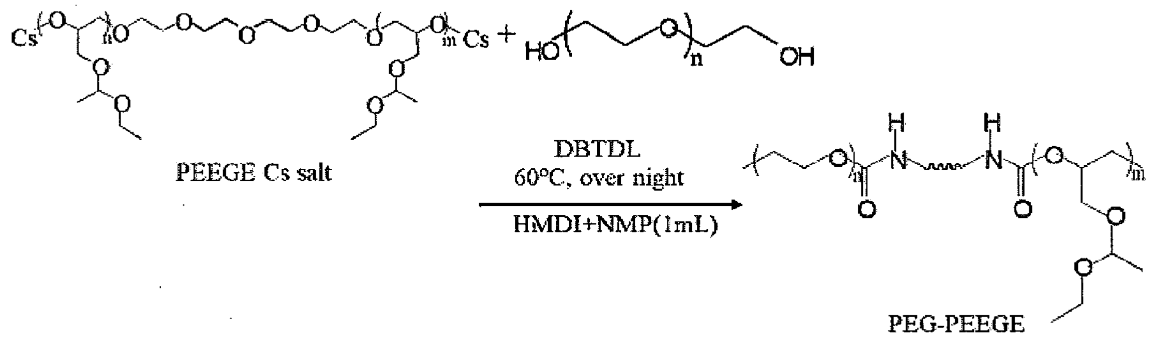


Fig. 5 is a figure showing the FT-IR spectrum of PEG-PEEGE. Fig. 6 is a figure showing the $^1$H NMR spectra of PEG, PEEGE, and PEG-PEEGE. As shown in Fig. 5 and Fig. 6, it was confirmed that a PEG-PEEGE multiblock copolymer was synthesized as the product.

(5) Synthesis of multiblock copolymer (PEG-PGLYD) (deprotection)

(Operation)

PEG-PEEGE (1.36 g, 0.21 mmol) and chloroform (40 mL) as a solvent were placed in a 100 mL two-necked flask equipped with a stirrer bar and stirred at room temperature until dissolved. A dropping funnel with a side arm was charged with concentrated sulfuric acid (10 mL, 0.184 mol), and a 200 mL two-necked flask equipped with a stirrer bar was charged with an excess amount of NaCl (15 g, 0.26 mol) and connected to the dropping funnel. A three-way stopcock was attached to the other neck of the flask containing NaCl, and the apparatuses were assembled in the following order: a triangular flask serving as a backflow trap, a reaction vessel fitted with a Pasteur pipette, and a bottle containing aqueous NaOH. Concentrated sulfuric acid was then slowly dropped to generate HCl gas and introduce it into the reaction solution.

(Work-up)

Nitrogen gas was blown into the reaction solution to remove HCl from the reaction solution.

(Purification)

After chloroform was removed with an evaporator, the structure of the obtained product was analyzed by IR and ^1H NMR.

(Results)

Appearance: viscous liquid
Yield: 1.161 g
Yield (percent): 85.92%

Fig. 7 is a figure showing the IR spectra of PEG-PGLYD and PEG-PEEGE. Fig. 8 is a figure showing the $^1$H NMR spectra of PEG-PEEGE and PEG-PGLYD. As shown in Fig. 7 and Fig. 8, it was confirmed that PEEGE was converted into PGLYD by acid treatment and that a PEG-PGLYD multiblock copolymer was synthesized.

Fig. 9 is a schematic view illustrating one embodiment (the above-described production method 2) of the method for producing the multiblock copolymer of the present invention. In this embodiment of the production method (the above-described production method 2), a PEG having hydroxyl groups at both terminals and a diisocyanate compound are added to a salt of PEEGE. As compared with production method 1, the number of reaction steps is smaller, and therefore a PEG-PGLYD multiblock copolymer can be synthesized in a simple and low-cost manner. In Fig. 9, as an example of use as an electrolyte, there is shown an example in which lithium bis(trifluorosulfonyl)amide is added to the multiblock copolymer and bis(trifluorosulfonyl)imide is added to the terminals.

<3> Solubility of multiblock copolymer (PEG-PGLYD)

1.5 g of the multiblock copolymer synthesized by the above method was added to 3 mL of NMP and stirred at room temperature for 24 hours. As shown in Fig. 10, it was confirmed that the multiblock copolymer dissolved and formed a homogeneous solution. This multiblock copolymer was thus shown to have high solubility.

<4> Tack of multiblock copolymer (PEG-PGLYD) (application as binder)

Using a film-forming apparatus, an NMP solution of the multiblock copolymer synthesized by the above method was applied onto an SUS substrate so as to have a thickness of 25 microns, and dried at 120°C for 10 minutes (Fig. 11). When the coating film was touched with a finger, it exhibited adhesiveness and was confirmed to have sufficient tack.

<5> Positive electrode material for lithium ion battery using multiblock copolymer (PEG-PGLYD)

An NMP solution of the multiblock copolymer synthesized by the above method was mixed with iron phosphate containing a conductive material, coated onto an aluminum foil to prepare a slurry, and then dried at 110°C for 10 minutes and subjected to a pressing treatment to obtain a positive electrode material (Fig. 12). As shown in Fig. 12, it was confirmed that the positive electrode material exhibited no peeling of the coating film.

<6> Charge/discharge test of lithium ion battery using multiblock copolymer (PEG-PGLYD)

The positive electrode material obtained inFig. 12 was punched into the size of a coin cell, and the initial charge/discharge characteristics of the fabricated battery were evaluated. As shown in Fig. 13, no abrupt decrease in capacity occurred, and it was confirmed that the material can be used as an electrode binder.

<7> Cycle test of lithium ion battery using multiblock copolymer (PEG-PGLYD)

The positive electrode material obtained in Fig. 12 was punched into the size of a coin cell, and a cycle test of the fabricated battery was carried out. As shown in Fig. 14, no abrupt deterioration in performance was observed in the cycle test up to 10 cycles, and it was confirmed that the battery can operate without any problem as a secondary battery.

[Explanation of Reference Numerals]

100 lithium ion battery
11 solid electrolyte layer
12 positive electrode active material layer
13 negative electrode active material layer
14 positive electrode current collector
15 negative electrode current collector

## Claims

1. A multiblock copolymer in which a unit structure in which a soft segment composed of polyglycidol (PGLYD) and a hard segment composed of polyethylene glycol (PEG) are bonded to each other is linked in a number of two or more.

2. The multiblock copolymer according to claim 1, wherein the weight average molecular weight is 10,000 or more.

3. The multiblock copolymer according to claim 1, having a lithium ion conduction path group.

4. An electrolyte composition for a lithium ion battery, comprising the multiblock copolymer according to claim 1.

5. A binder composition for a lithium ion battery, comprising the multiblock copolymer according to claim 1.

6. A buffer composition for a lithium ion battery, comprising the multiblock copolymer according to claim 1.

7. A lithium ion battery comprising at least one of the electrolyte composition according to claim 4, the binder composition according to claim 5, and the buffer composition according to claim 6.

8. A method for producing the multiblock copolymer according to claim 1, the method comprising:

synthesizing a compound represented by the following formula (1) by reacting PEG having isocyanate groups at both terminals with polyEEGE (PEEGE),

[Formula 1]

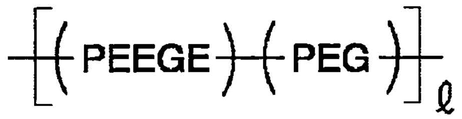

(1)

(where l is a natural number of 2 or more); and
synthesizing a multiblock copolymer represented by the following formula (2) by acting an acid on the compound,

[Formula 2]

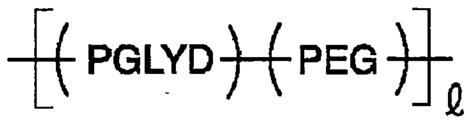

(2)

(where l is a natural number of 2 or more).

9. A method for producing the multiblock copolymer according to claim 1, the method comprising:

synthesizing a compound represented by the following formula (1) by reacting PEG having hydroxyl groups at both terminals, polyEEGE (PEEGE), and a diisocyanate compound,

[Formula 3]

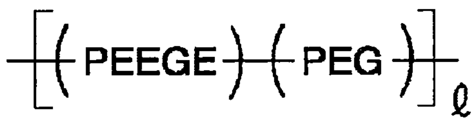

(1)

(where l is a natural number of 2 or more); and
synthesizing a multiblock copolymer represented by the following formula (2) by acting an acid on the compound,

[Formula 4]

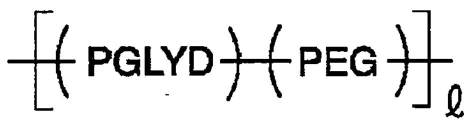

(2)

(where l is a natural number of 2 or more).

FIG.1

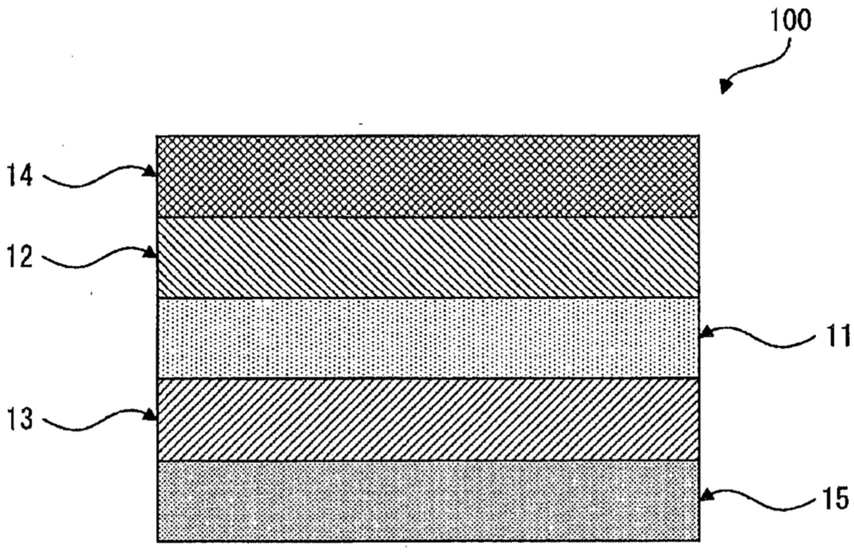

FIG.2

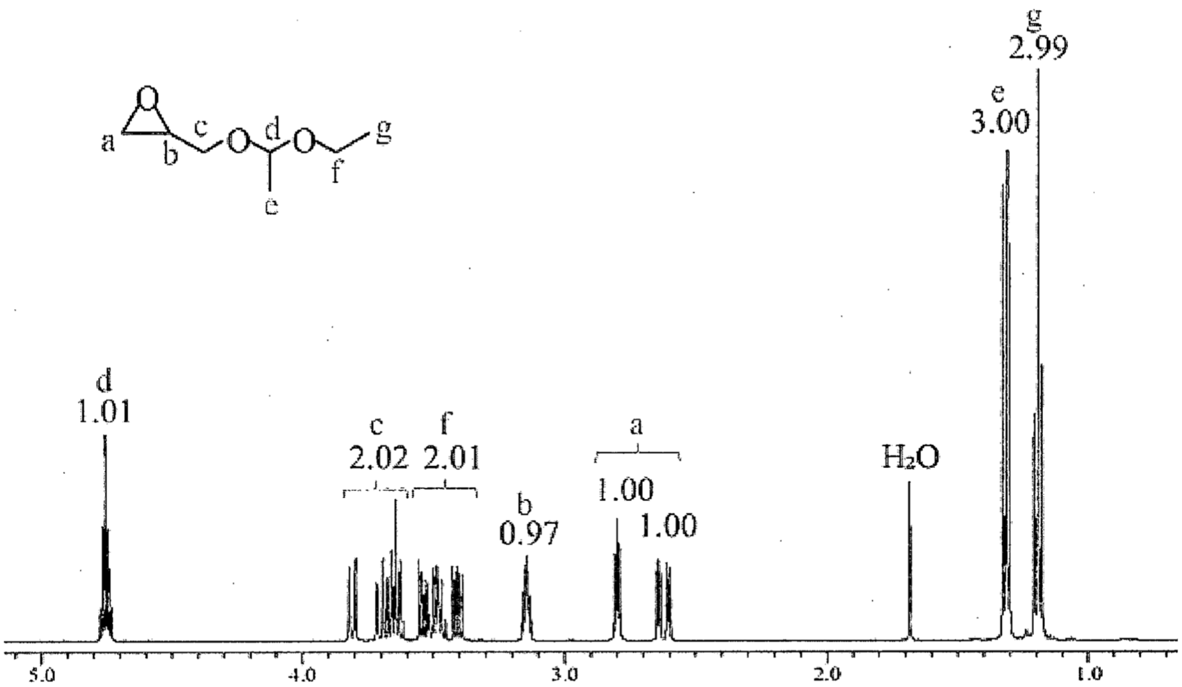

FIG.3

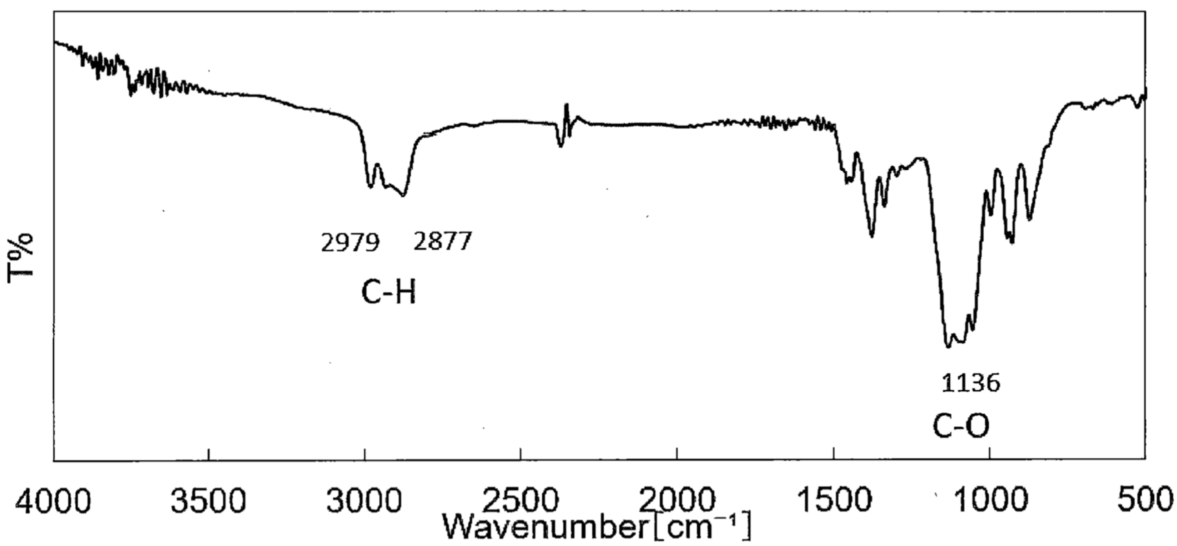
T%
2979
2877
C-H
1136
C-O
4000
3500
3000
2500
2000
1500
1000
500
Wavenumber[cm⁻¹]

# FIG.4

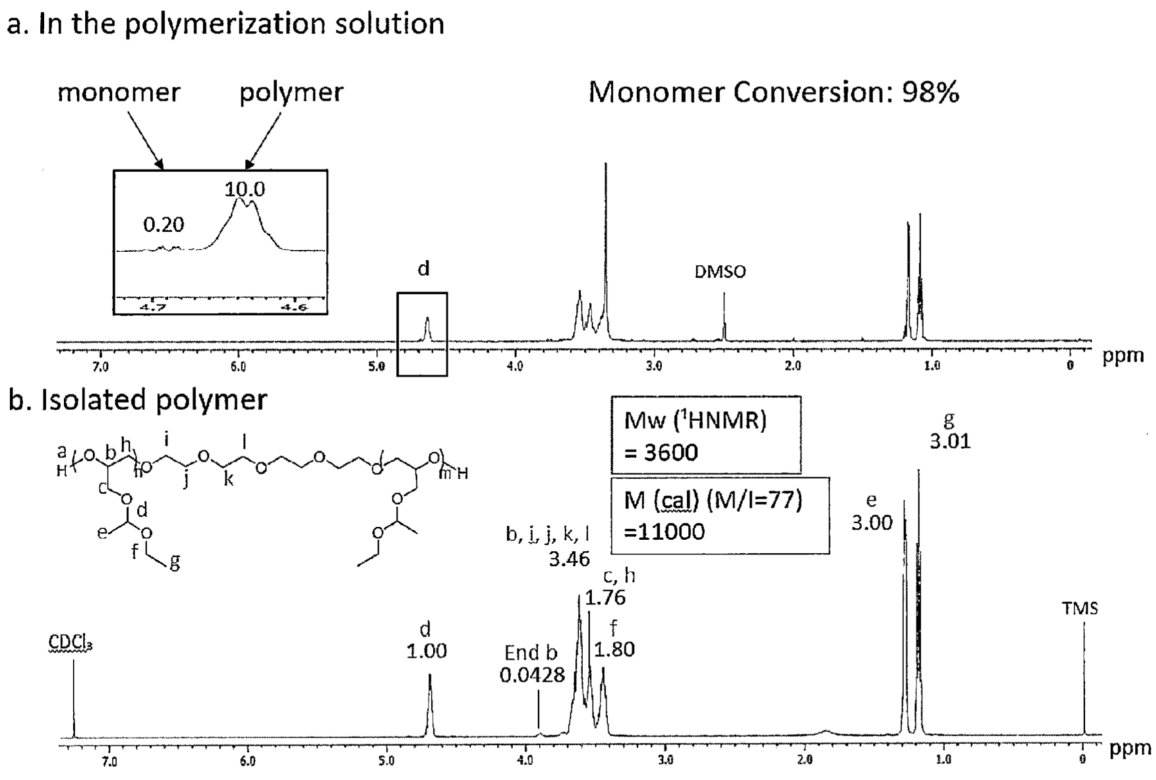
a. In the polymerization solution
monomer
polymer
Monomer Conversion: 98%
0.20
10.0
4.7
4.6
d
DMSO
7.0
6.0
5.0
4.0
3.0
2.0
1.0
0
ppm
b. Isolated polymer
Mw (1HNMR)
= 3600
M (cal) (M/I=77)
=11000
g
3.01
e
3.00
b, i, j, k, l
3.46
c, h
1.76
f
1.80
d
1.00
End b
0.0428
CDCl3
TMS
7.0
6.0
5.0
4.0
3.0
2.0
1.0
0
ppm

FIG.5

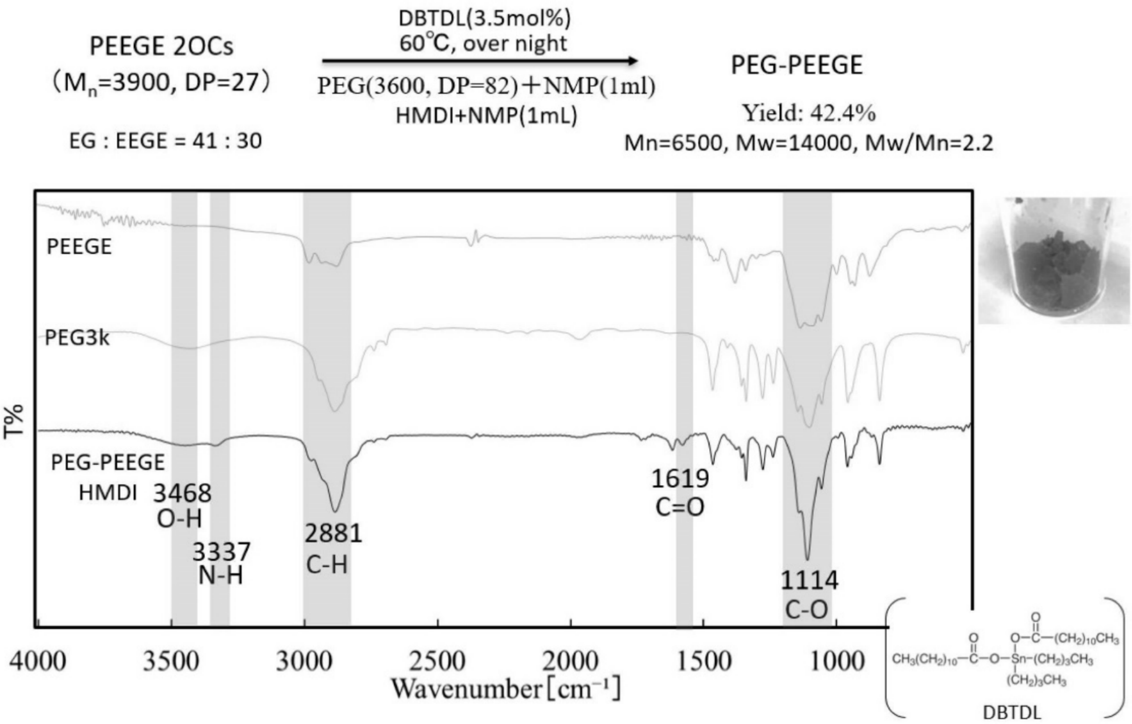
PEEGE 2OCs
(Mn=3900, DP=27)
EG : EEGE = 41 : 30
DBTDL(3.5mol%)
60°C, over night
PEG(3600, DP=82)+NMP(1ml)
HMDI+NMP(1mL)
PEG-PEEGE
Yield: 42.4%
Mn=6500, Mw=14000, Mw/Mn=2.2
PEEGE
PEG3k
PEG-PEEGE
HMDI
T%
3468
O-H
3337
N-H
2881
C-H
1619
C=O
1114
C-O
4000
3500
3000
2500
2000
1500
1000
Wavenumber[cm⁻¹]
DBTDL

FIG.6

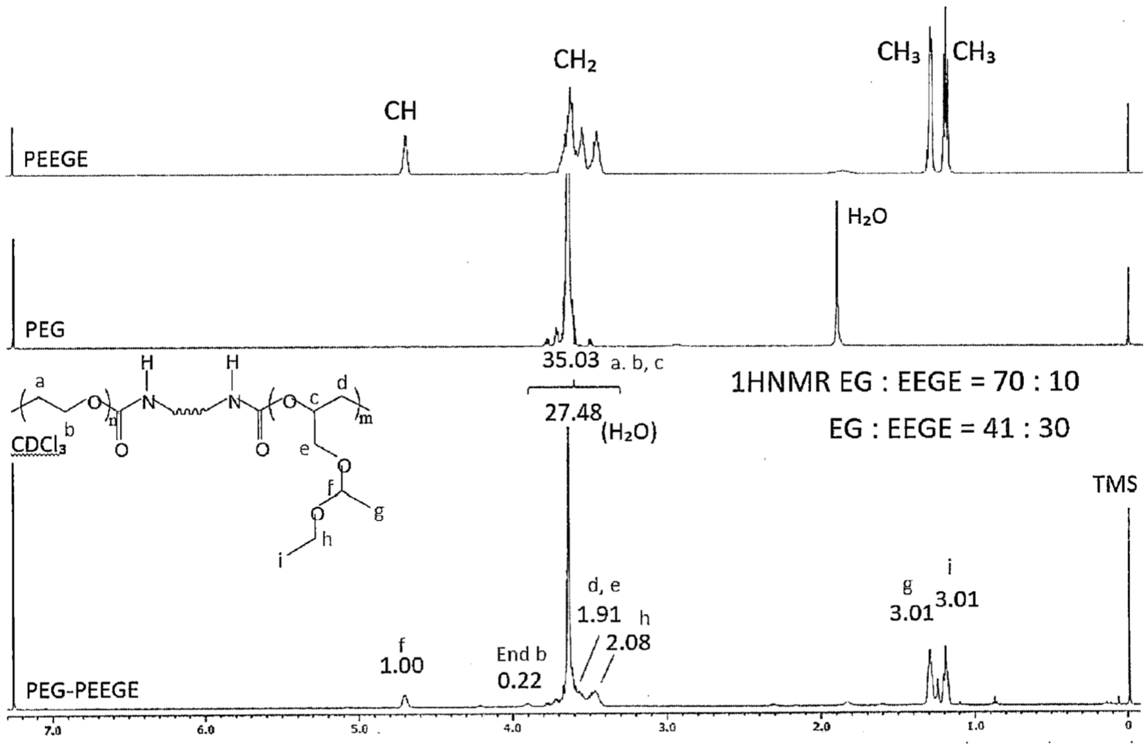
CH
CH2
CH3
CH3
PEEGE
H2O
PEG
35.03 a. b, c
27.48
(H2O)
1HNMR EG : EEGE = 70 : 10
EG : EEGE = 41 : 30
CDCl3
TMS
d, e
1.91
h
2.08
f
1.00
End b
0.22
g
3.01
i
3.01
PEG-PEEGE
7.0
6.0
5.0
4.0
3.0
2.0
1.0
0

FIG.7

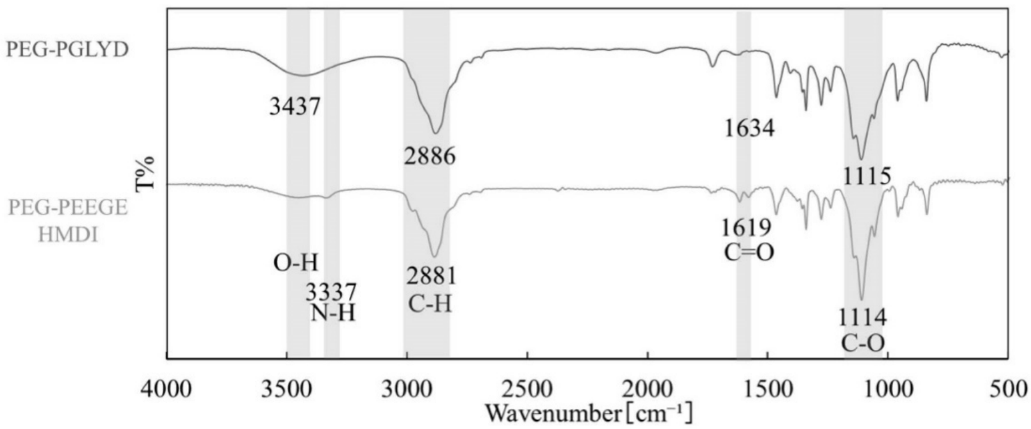
PEG-PGLYD
3437
2886
1634
1115
T%
PEG-PEEGE
HMDI
O-H
3337
N-H
2881
C-H
1619
C=O
1114
C-O
4000
3500
3000
2500
2000
1500
1000
500
Wavenumber[cm⁻¹]

FIG.8

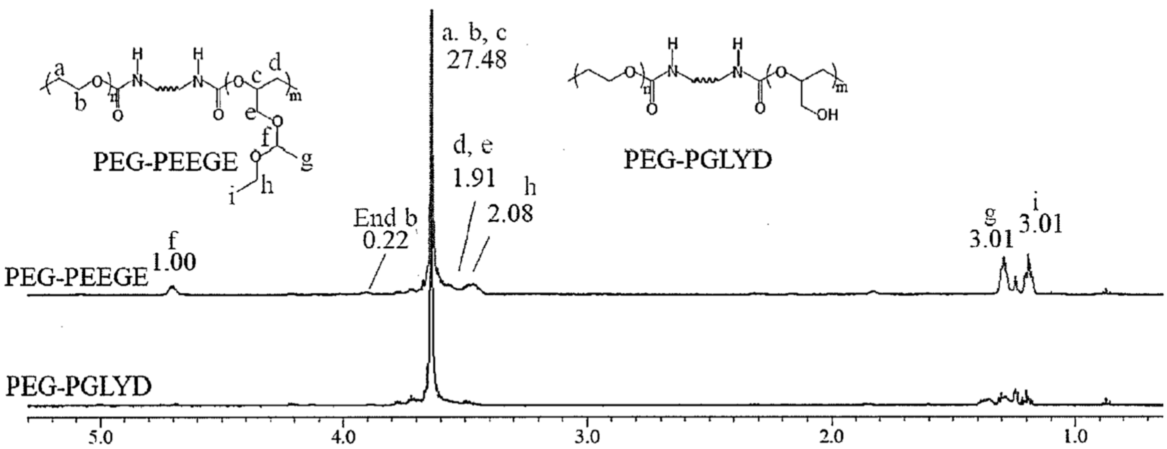
PEG-PEEGE
PEG-PGLYD
a. b, c
27.48
d, e
1.91
h
2.08
End b
0.22
f
1.00
g
3.01
i
3.01
PEG-PEEGE
PEG-PGLYD
5.0
4.0
3.0
2.0
1.0

FIG.9

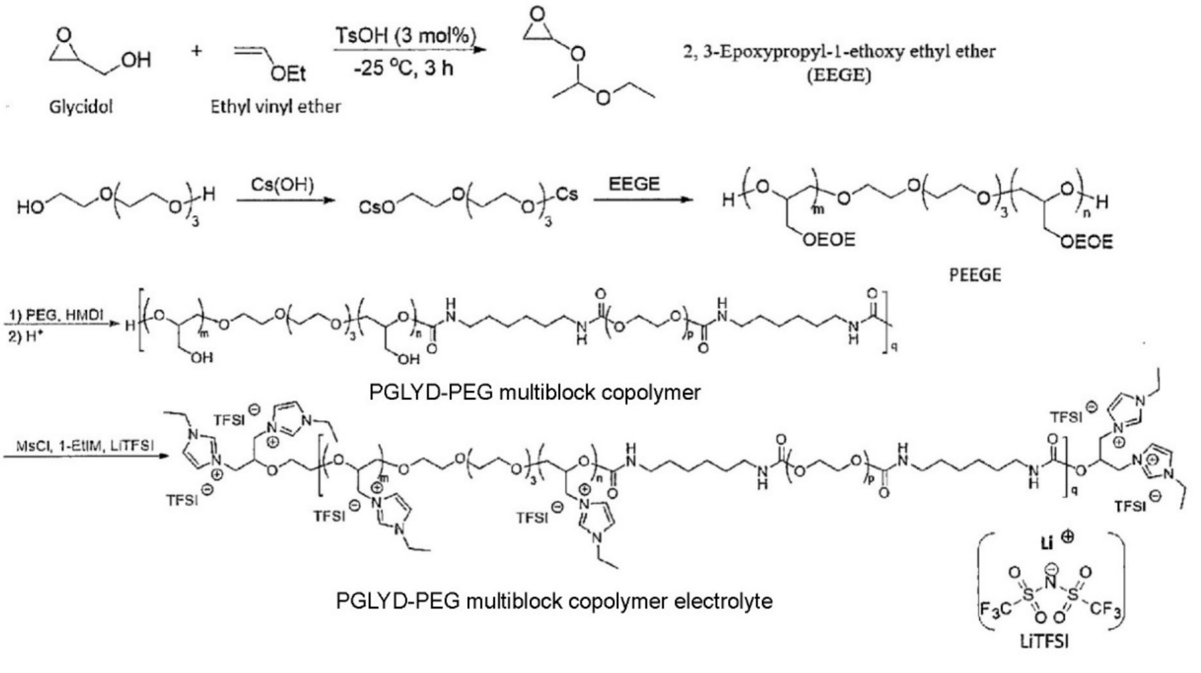
TsOH (3 mol%)
-25 °C, 3 h
Glycidol
Ethyl vinyl ether
2, 3-Epoxypropyl-1-ethoxy ethyl ether
(EEGE)
Cs(OH)
EEGE
PEEGE
1) PEG, HMDI
2) H+
PGLYD-PEG multiblock copolymer
MsCl, 1-EtIM, LiTFSI
PGLYD-PEG multiblock copolymer electrolyte
LiTFSI

FIG.10

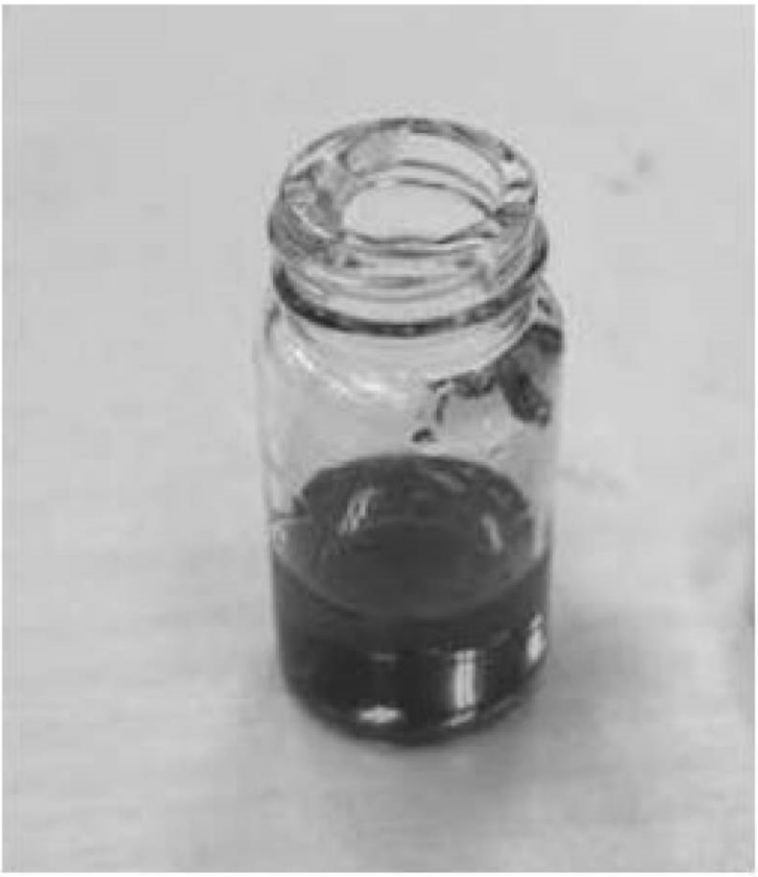

FIG.11

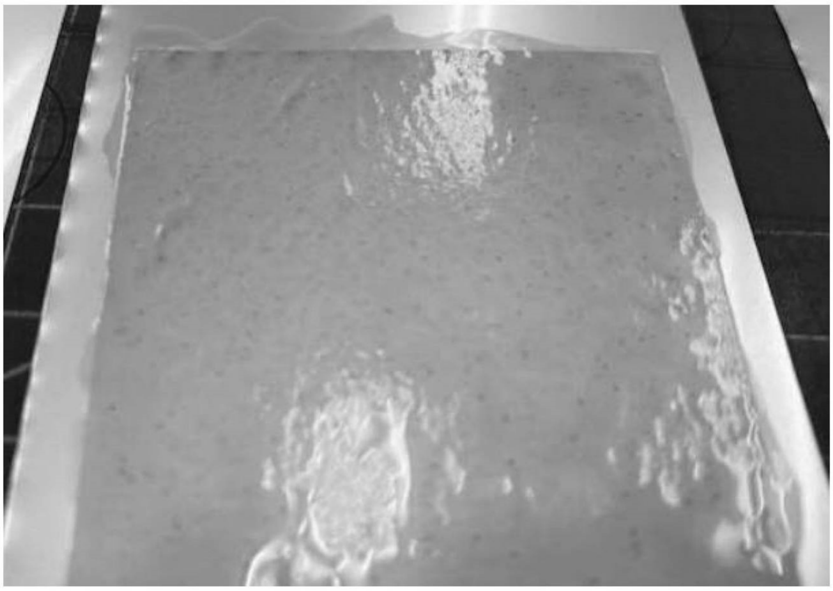

FIG.12

Positive electrode coating film

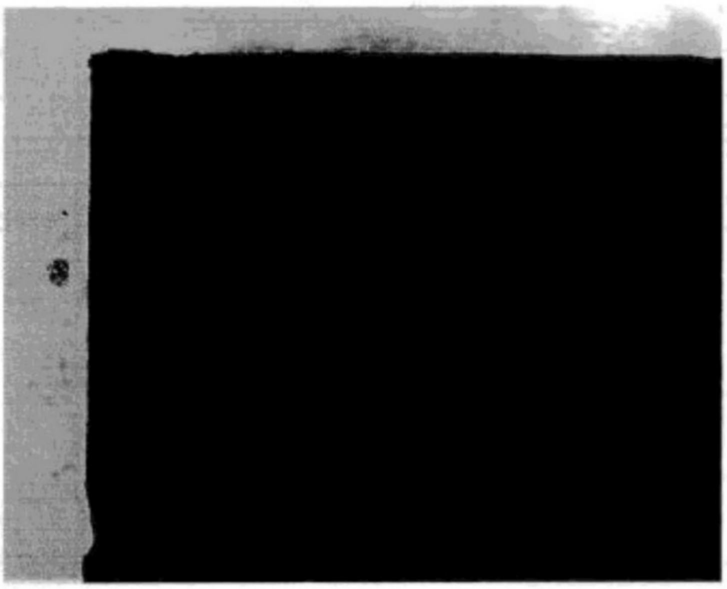

FIG.13

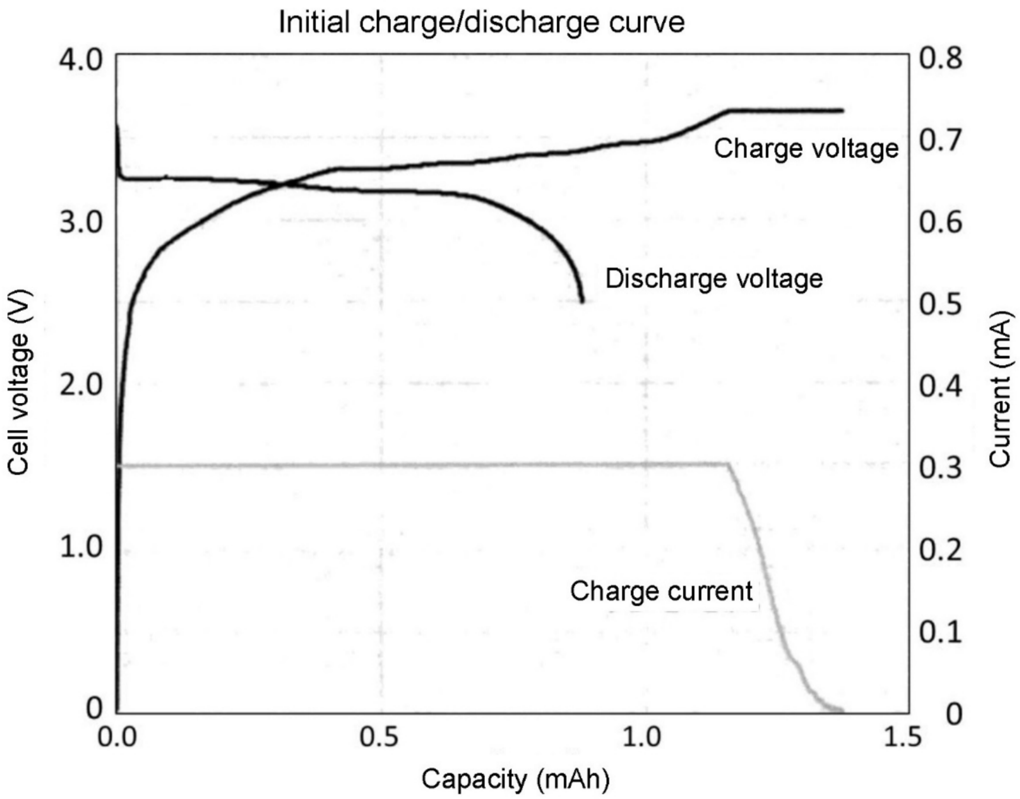
Initial charge/discharge curve
Cell voltage (V)
Current (mA)
Capacity (mAh)
Charge voltage
Discharge voltage
Charge current
4.0
3.0
2.0
1.0
0
0.8
0.7
0.6
0.5
0.4
0.3
0.2
0.1
0
0.0
0.5
1.0
1.5

FIG.14

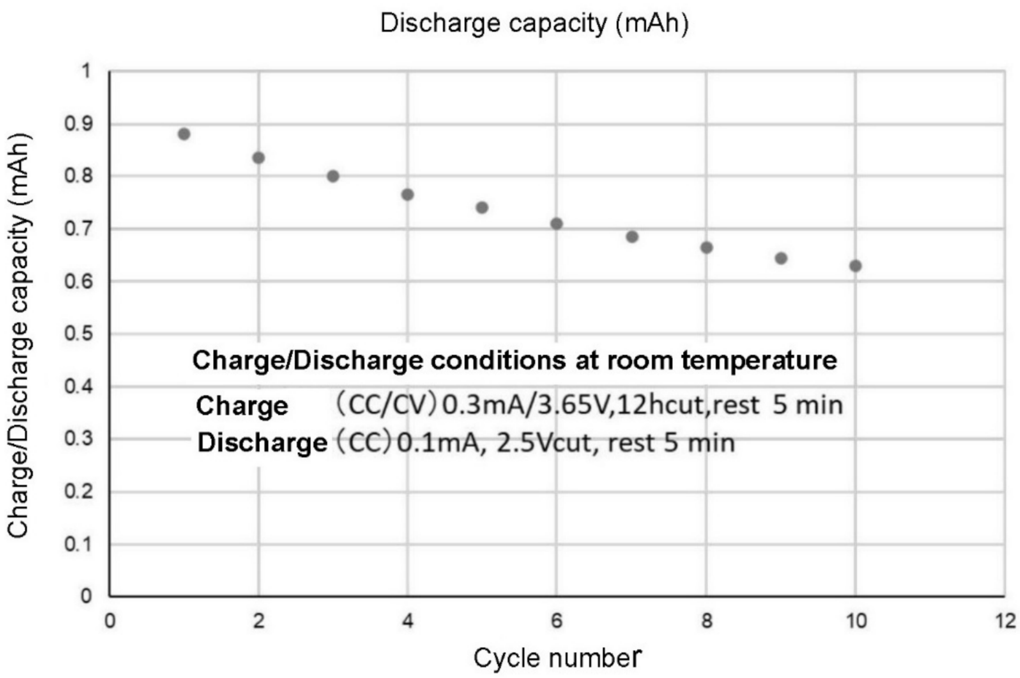
Discharge capacity (mAh)
Charge/Discharge capacity (mAh)
1
0.9
0.8
0.7
0.6
0.5
0.4
0.3
0.2
0.1
0
0
2
4
6
8
10
12
Cycle number
Charge/Discharge conditions at room temperature
Charge (CC/CV) 0.3mA/3.65V,12hcut,rest 5 min
Discharge (CC) 0.1mA, 2.5Vcut, rest 5 min

**INTERNATIONAL SEARCH REPORT**

International application No. **PCT/JP2024/023005**

**A. CLASSIFICATION OF SUBJECT MATTER**

***C08G 18/48***(2006.01)i; ***C08G 18/10***(2006.01)i; ***C08G 65/06***(2006.01)i; ***H01B 1/06***(2006.01)i; ***H01M 4/62***(2006.01)i; ***H01M 10/052***(2010.01)i; ***H01M 10/0565***(2010.01)i
FI: C08G18/48 004; C08G18/10; C08G18/48 037; C08G65/06; H01B1/06 A; H01M4/62 Z; H01M10/052; H01M10/0565

According to International Patent Classification (IPC) or to both national classification and IPC

**B. FIELDS SEARCHED**

Minimum documentation searched (classification system followed by classification symbols)

C08G18/48; C08G18/10; C08G65/06; H01B1/06; H01M4/62; H01M10/052; H01M10/0565

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 02-038451 A (YOTSUKAICHI GOSEI KK) 07 February 1990 (1990-02-07) claims, p. 3, upper right column, lines 7-13, lower left column, lines 9-15, p. 4, lower left column, lines 9-16, example 3 | 1-7 |
| Y | | 8-9 |
| X | WO 00/36017 A1 (NISSHINBO INDUSTRIES, INC.) 22 June 2000 (2000-06-22) claims 1-3, p. 9, lines 16-19, p. 17, lines 4-20, example 4 | 1-7 |
| Y | | 8-9 |
| X | DIMITROV, Philip et al. Synthesis and self-association in aqueous media of poly(ethylene oxide)/poly(ethyl glycidyl carbamate) amphiphilic block copolymers. Polymer. 2006, 47(14), pp. 4905-4915 in particular, schemes 2, 3, table 1 | 1-2 |
| Y | | 8-9 |
| A | | 3-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/023005**

**C. DOCUMENTS CONSIDERED TO BE RELEVANT**

| Category* | Citation of document, with indication, where appropriate, of the relevant passages | Relevant to claim No. |
|---|---|---|
| X | US 2021/0252040 A1 (THE UNIVERSITY OF CHICAGO) 19 August 2021 (2021-08-19) in particular, scheme 2, table 2 | 1-2 |
| Y | | 8-9 |
| A | | 3-7 |
| A | JP 2018-502953 A (UNIVERSITE DE BORDEAUX) 01 February 2018 (2018-02-01) entire text | 1-9 |
| A | WO 00/35991 A1 (NISSHINBO INDUSTRIES, INC.) 22 June 2000 (2000-06-22) entire text | 1-9 |
| A | JP 10-204172 A (DAISO CO., LTD.) 04 August 1998 (1998-08-04) entire text | 1-9 |

Form PCT/ISA/210 (second sheet) (July 2022)

**INTERNATIONAL SEARCH REPORT**
**Information on patent family members**

International application No.
**PCT/JP2024/023005**

| Patent document cited in search report | Publication date (day/month/year) | Patent family member(s) | Publication date (day/month/year) |
|---|---|---|---|
| JP 02-038451 A | 07 February 1990 | (Family: none) | |
| WO 00/36017 A1 | 22 June 2000 | US 6469107 B1<br>claims 1-13, column 6, lines 3-6, column 10, lines 34-54, example 4<br>EP 1057869 A1<br>KR 10-2001-0024940 A<br>CN 1293698 A | |
| US 2021/0252040 A1 | 19 August 2021 | WO 2019/209844 A1 | |
| JP 2018-502953 A | 01 February 2018 | US 2017/0360947 A1<br>entire text<br>WO 2016/097358 A1<br>EP 3034538 A1 | |
| WO 00/35991 A1 | 22 June 2000 | US 6472106 B1<br>entire text<br>EP 1057846 A1<br>KR 10-2001-0024942 A<br>CN 1293688 A | |
| JP 10-204172 A | 04 August 1998 | US 5968681 A<br>entire text<br>EP 838487 A2 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H0525353 A
- WO 0035991 A


### Non-patent literature cited in the description


- **NAOYA OGATA**. *Journal of the Textile Machinery Society of Japan*, 1990, 52-57
- **H. FREY et al.** *J. Am. Chem. Soc.*, 2009, vol. 131 (23), 7954-7955